# Europäisches Patentamt
# European Patent Office
# Office européen des brevets

(11) Veröffentlichungsnummer: **0 151 685**
**B1**

(12) **EUROPÄISCHE PATENTSCHRIFT**

(45) Veröffentlichungstag der Patentschrift:
18.05.88

(51) Int. Cl.⁴: **A 62 B 19/02**, A 62 D 9/00,
B 01 J 23/40, B 01 D 53/36

(21) Anmeldenummer: 84111819.3

(22) Anmeldetag: 03.10.84

(54) **Pt-Katalysator auf einem Träger als Luftreinigungsmittel.**

(30) Priorität: 14.02.84 DE 3405100

(43) Veröffentlichungstag der Anmeldung:
21.08.85 Patentblatt 85/34

(45) Bekanntmachung des Hinweises auf die Patenterteilung:
18.05.88 Patentblatt 88/20

(84) Benannte Vertragsstaaten:
**BE DE FR GB NL**

(56) Entgegenhaltungen:
**DE-A-2 610 287**
**US-A-3 576 596**
**US-A-4 185 082**

(73) Patentinhaber: **Drägerwerk Aktiengesellschaft,
Moislinger Allee 53- 55, D-2400 Lübeck 1 (DE)**

(72) Erfinder: **van der Smissen, Carl- Ernst, Dr., Am
Traveeck 30, D-2400 Lübeck (DE)**

LIBER, STOCKHOLM 1988

EP 0 151 685 B1

## Beschreibung

Die Erfindung betrifft einen Pt-Katalysator auf einem Trager als Luftreinigungsmittel zur Verwendung in Luftfiltern.

Ein derartiges Luftreinigungsmittel ist bereits aus der ASME publication der American Society of Mechanical Engineers der Ausgabe 77-ENAs-28 bekannt.

Es katalysieren hier Platinmetalle auf Trägermaterialien die Umsetzung von CO mit Luftsauerstoff. Diese Eigenschaft wird auf granulierten, platinmetallhaltigen Trägern als Filtermasse für CO-Filter verwendet. Für viele Anwendungsgebiete von Luftfiltern ist es jedoch wünschenswert, außer dem CO auch noch andere schädliche Gase aus der Luft zu entfernen. Die bisher bekanntgewordenen platinmetallhaltigen CO-Filter bilden aber vor allem keinen oder nur geringen Schutz gegen saure Gase wie Chlor, Blausäure, Schwefelwasserstoff und ähnliche Gase. Sollte bisher ein Filter, z. B. ein Atemschutzfilter für eine Gasmaske, gleichzeitig Schutz bieten gegen saure Gase und CO, dann mußte es zwei unterschiedliche Filtermassen enthalten. Die eine Filtermasse war wirksam zur Abscheidung der sauren Gase, die andere war ein CO-Oxidationskatalysator. Derartige Atemschutzfilter sind sehr groß, schwer und umständlich zu handhaben.

Aus der US-A-4 185 082, von der der erste Teil des Anspruchs 1 aus geht, sind Filtermaterialen bekannt, die auch Schutz gegen Schwefeldioxid bieten.

Der Erfindung liegt die Aufgabe zugrunde, einen Pt-Katalysator auf einem Träger als Luftreinigungsmittel zur Verwendung in Luftfiltern so zu verbessern, daß eine einschichtige und daher, bei gleicher Leistung neben CO auch zusätzlich gegen saure Gase, eine kleinere und leichtere Filterfüllung möglich wird.

Diese Aufgabe wird erfindungsgemäß dadurch gelöst, daß der Träger zur zusätzlichen Abscheidung von Blausäure aus zinkoxidhaltiger Aktivkohle besteht.

Die mit der Erfindung erzielten Vorteile bestehen insbesondere darin, daß die Pt-Katalysatoren mit Zinkoxid als Oxiden amminbildendem Schwermetall zusätzlich hochaktiv werden zur Abscheidung saurer Gase. Die durch die Anwendung der Platinmetalle auf dem Träger erzeugte Fähigkeit zur katalytischen CO-Oxidation wird dadurch nicht gestört. Während Doppelimprägnierungen häufig zu einer Verringerung der Abscheideleistung jeder der beiden einzelnen Imprägnierungen führen, stören sich hier die Platinmetallimprägnierung und die Oxidimprägnierung nicht. Im Gegenteil, es ergibt sich mit beiden Imprägnierungen eine Verstärkung der jeweiligen Wirksamkeit.

Ein Pt-Katalysator nach der Erfindung ist wie folgt aufgebaut:

Ein granulierter, poröser Träger aus Aktivkohle, aktiver Tonerde, Kieselgel oder Zeolith trägt eine Schicht des Zinkoxids als amminbildendem Metall auf der sich Platin, Palladium, Rhodium oder Ruthenium befinden. Die Platinmetalle können sich elementar, als Oxid oder als Salz, z. B. als Chlorid, auf der 1. Oxidschicht befinden. Je nach dem Feuchtigkeitsgehalt des Trägers sind die Platinmetalle in den verschiedenen Formen unterschiedlich wirksam. Ist der Träger sehr trocken, sind die elementaren Platinmetalle besonders wirksam. Bei mittlerer Feuchtigkeit des Trägers steigert ein gewisser Anteil an Platinmetalloxid die Wirksamkeit, während bei hohen Feuchtigkeiten ein Zusatz von Platinmetallchlorid sich vorteilhaft auswirkt. Im praktischen Gebrauch wird man daher versuchen, Platinmetalle in allen drei Formen auf dem Träger zu erhalten. Ferner kann es günstig sein, zur Erzielung besonderer Gasabscheideleistungen zusätzlich zu den Metalloxiden noch Metallsalze, z. B. Chloride oder Chromate, auf den Träger zu bringen.

Aufbau und Herstellung eines Luftreinigungsmittels nach der Erfindung sollen an einem Beispiel erläutert werden:

Aktivkohle wird mit einer wäßrigen Lösung von Zinknitrat getränkt, so daß sich auf der Kohle 10 Gew.-% Zink befinden. Die imprägnierte Kohle wird im Vakuum getrocknet und dann auf 200° C erhitzt, so daß das Zinknitrat in Zinkoxid übergeführt wird. Die zinkoxidhaltige Aktivkohle wird nun mit einer wäßrigen Lösung von Palladiumchlorid getränkt, so daß sich auf der Kohle 0,5 Gew.-% Palladium befinden. Die getränkte Kohle wird getrocknet und dann mit einer stark verdünnten Hydrazinlösung behandelt. Nach Reduzierung von etwa der Hälfte des auf der Kohle befindlichen Palladiumchlorids wird die Hydrazinlösung im Vakuum bei 50° C abgesogen. Die Filtermasse wird mit 80 % rel. Feuchte ins Gleichgewicht gebracht, so daß im praktischen Gebrauch sich der Wassergehalt nicht wesentlich ändert. Die fertige Filtermasse hat ausgezeichnete Abscheideleistungen für Chlor, Blausäure, Schwefelwasserstoff und Schwefeldioxid und bewirkt die vollständige Oxidation von CO sowohl bei niedrigen Konzentrationen von wenigen mL CO pro m$^3$ Luft als auch bei hohen Konzentrationen von 1,0 % und 1,5 % CO.

## Patentansprüche

1. Luftreinigungsmittel zur Abscheidung von Kohlenstoffmonoxid durch einen Träger, der mit Edelmetallen aus der Pt-Gruppe imprägniert ist, dadurch gekennzeichnet, daß der Träger zur zusätzlichen Abscheidung von Blausäure aus zinkoxidhaltiger Aktivkohle besteht.

2. Verfahren zur Herstellung eines Luftreinigungsmittels nach Anspruch 1, dadurch gekennzeichnet, daß Aktivkohle zur Imprägnierung mit 10 Gew.-% Zink mit einer wäßrigen Lösung von Zinknitrat getränkt wird, anschließend im Vakuum getrocknet und dann auf 200° C zur Überführung des Zinknitrat in Zinkoxid erhitzt wird, daß die zinkoxidhaltige Aktivkohle zur Imprägnierung mit 0,5 Gew.-% Palladium mit einer wäßrigen Lösung von Palladiumchlorid getränkt, danach getrocknet und mit stark verdünnter Hydrazinlösung behandelt wird, die nach Reduzierung von etwa der Hälfte des auf der Aktivkohle befindlichen Palladiumchlorids bei 50° C abgesogen wird und die Filtermasse abschließend mit Luft von etwa 80 % rel. Feuchte ins Gleichgewicht gebracht wird.

## Claims

1. An air purification agent for the separation of carbon monoxide using a support which is impregnated with noble metals from the Pt group, characterised in that the support is made of activated carbon containing zinc oxide for the additional separation of hydrogen cyanide.

2. A method for the production of an air purification agent according to claim 1, characterised in that activated carbon is saturated, for the purposes of impregnation with 10 % by weight zinc, with an aqueous solution of zinc nitrate, is subsequently vacuum-dried and is then heated to 200° C for the purpose of converting the zinc nitrate into zinc oxide, in that the activated carbon containing zinc oxide is saturated, for the purposes of impregnation with 0.5 % by weight palladium, with an aqueous solution of palladium chloride, is afterwards dried and is treated with greatly diluted hydrazine solution which after reduction of approximately half of the palladium chloride on the activated carbon is drawn off at 50° C, and the filter mass is finally brought into equilibrium with air of approximately 80 % relative humidity.

## Revendications

1. Epurateur d'air pour la séparation de monoxyde de carbone au moyen d'un support imprégné de métaux précieux du groupe du Pt, caractérisé en ce qu'afin de séparer également l'acide cyanhydrique, le support est constitué de charbon actif contenant de l'oxyde de zinc.

2. Procédé de fabrication d'un épurateur d'air selon la revendication 1, caractérisé en ce que le charbon actif est imprégné d'une solution aqueuse de nitrate de zinc afin de réaliser une imprégnation de 10 % (en poids) de zinc, puis est séché sous vide et ensuite chauffé à 200° C pour transformer le nitrate de zinc en oxyde de zinc, et en ce que le charbon actif contenant de l'oxyde de zinc est imprégné d'une solution aqueuse de chlorure de palladium afin de réaliser une imprégnation de 0,5 % (en poids) de palladium, puis est séché et traitée avec une solution d'hydrazine fortement diluée qui, une fois qu'environ la moitié du chlorure de palladium qui se trouve sur le charbon actif a été réduite, est évacuée par aspiration à une température d'environ 50° C, la masse filtrante étant enfin amenée en équilibre avec de l'air présentant une humidité relative d'environ 80 %.